# EUROPÄISCHE PATENTSCHRIFT

(11) **EP 2 421 630 B1**
(45) Veröffentlichungstag und Bekanntmachung des Hinweises auf die Patenterteilung: **13.03.2013**
(21) Anmeldenummer: 09779337.6
(22) Anmeldetag: 22.04.2009
(51) Int. Cl.: B01D 46/00, B01D 46/04, B01D 46/46

(54) **VERFAHREN ZUM ABREINIGEN ZWEIER FILTER EINES SAUGGERÄTES FÜR REINIGUNGSZWECKE SOWIE SAUGGERÄT ZUR DURCHFÜHRUNG DES VERFAHRENS**
METHOD FOR CLEANING TWO FILTERS OF A SUCTION DEVICE FOR CLEANING PURPOSES, AND SUCTION DEVICE FOR PERFORMING THE METHOD
PROCÉDÉ POUR DÉCRASSER LES DEUX FILTRES D'UN ASPIRATEUR À DES FINS DE NETTOYAGE ET ASPIRATEUR POUR METTRE EN OEUVRE LE PROCÉDÉ

(43) Veröffentlichungstag der Anmeldung: 29.02.2012
(73) Patentinhaber: Alfred Kärcher GmbH & Co. KG, 71364 Winnenden (DE)
(72) Erfinder: RENTSCHLER, Werner, 71332 Waiblingen (DE); ENGELHARDT, Rainer, 71397 Leutenbach (DE); FRANK, Jürgen, 71737 Kirchberg (DE); ECKSTEIN, Daniel, 71364 Winnenden (DE)
(74) Vertreter: Hoeger, Stellrecht & Partner Patentanwälte
(86) Internationale Anmeldenummer: PCT/EP2009/054851
(87) Internationale Veröffentlichungsnummer: WO 2010/121656

(56) Entgegenhaltungen:
- EP-A- 1 997 415
- WO-A-85/02528
- WO-A-2005/006934
- DE-A1- 1 407 945
- DE-C1- 4 138 223
- DE-U1-202004 012 911
- DE-U1-202007 015 242
- US-A- 3 951 623
- US-A- 5 217 509
- US-A1- 2003 041 729

## Beschreibung

Die Erfindung betrifft ein Verfahren zum Abreinigen eines ersten Filters und eines zweiten Filters eines Sauggerätes für Reinigungszwecke, das einen Schmutzsammelbehälter mit einem Saugeinlass aufweist, wobei der Schmutzsammelbehälter über das erste Filter und das zweite Filter sowie eine sich daran anschließende erste Absaugleitung bzw. zweite Absaugleitung mit Unterdruck beaufschlagt wird, wobei der Schmutzsammelbehälter über die erste Absaugleitung und das erste Filter mit Hilfe eines ersten Saugaggregates des Sauggerätes sowie über die zweite Absaugleitung und das zweite Filter mit Hilfe eines zweiten Saugaggregates des Sauggerätes mit Unterdruck beaufschlagt wird .

Außerdem betrifft die Erfindung ein Sauggerät für Reinigungszwecke mit einem Schmutzsammelbehälter, der einen Saugeinlass aufweist, wobei das Sauggerät an einem ersten Saugauslass ein erstes Filter und an einem zweiten Saugauslass ein zweites Filter aufweist, an welche sich eine erste Absaugleitung bzw. eine zweite Absaugleitung anschließen, über welche der Schmutzsammelbehälter mit Unterdruck beaufschlagbar ist, und wobei das Sauggerät ein erstes Saugaggregat zur Unterdruckbeaufschlagung des Schmutzsammelbehälters über die erste Absaugleitung und das erste Filter sowie ein zweites Saugaggregat zur Unterdruckbeaufschlagung des Schmutzsammelbehälters über die zweite Absaugleitung und das zweite Filter aufweist.

Die DE 1 407 945 A1 beschreibt ein Sauggerät mit einem Schmutzsammelbehälter für eingesaugtes Sauggut. Der Schmutzsammelbehälter kann über eine Mehrzahl von Saugaggregaten mit Unterdruck beaufschlagt werden. Jedem Saugaggregat ist ein Absaugraum und ein zwischen diesen und dem Schmutzsammelbehälter geschaltetes Filter zugeordnet. Um ein Filter zu reinigen, wird das jeweilige Saugaggregat abgeschaltet, woraufhin Fremdluft in einer der normalen Saugströmung entgegengesetzten Richtung durch das Saugaggregat hindurch in den jeweiligen Absaugraum einströmen kann. Weiter kann die Fremdluft entgegen der Saugströmung durch das Filter hindurch in den Schmutzsammelbehälter strömen, um das Filter abzureinigen. Dies hat einen unkontrollierbaren Druckanstieg im Schmutzsammelbehälter zur Folge und kann dazu führen, dass der vom Sauggerät bereitgestellte Unterdruck nicht mehr ausreicht, um Sauggut anzusaugen.

In der US 2005/0011036 A1 ist ein Sauggerät in Form eines Staubsaugers beschrieben. Der Staubsauger weist zwei oder mehr Filter auf, denen jeweils eine Absaugleitung sowie ein in dieselbe geschaltetes Schließventil zum wahlweisen Einlass von Fremdluft über Fremdlufteinlässe zugeordnet sind. Die Absaugleitungen münden ineinander und können von einem Saugaggregat mit Unterdruck beaufschlagt werden. Im normalen Saugbetrieb sind die Fremdlufteinlässe mittels der Schließventile verschlossen, und der Schmutzsammelbehälter wird über sämtliche Absaugleitungen mit Unterdruck beaufschlagt. Dies erlaubt es, am freien Ende eines an den Saugeinlass anschließbaren Saugschlauches Sauggut, wie zum Beispiel Schmutz oder Flüssigkeiten, einzusaugen und im Schmutzsammelbehälter abzuscheiden. Bei fortdauerndem Saugbetrieb können sich Schmutzpartikel an den Filtern anlagern und diese zusetzen, was einen Anstieg des Druckes im Schmutzsammelbehälter und dadurch eine verminderte Saugleistung des Staubsaugers zur Folge hat.

Zur Abreinigung eines der Filter schlägt die US 2005/0011036 A1 vor, mittels des zugehörigen Schließventils den Fremdlufteinlass der zugehörigen Absaugleitung zu öffnen, wohingegen die Fremdlufteinlässe an den übrigen Absaugleitungen mittels der weiteren Schließventile verschlossen bleiben. Durch den geöffneten Fremdlufteinlass kann Fremdluft, beispielsweise mit atmosphärischem Druck, in die Absaugleitung einströmen und den zu reinigenden Filter reinraumseitig beaufschlagen. Aufgrund der Differenz des Druckes der Fremdluft und des Druckes der Luft im Schmutzsammelbehälter erfährt der zu reinigende Filter einen Druckstoß, in dessen Folge sich Schmutzpartikel vom Filter ablösen und im Schmutzsammelbehälter abscheiden. Die Fremdluft kann das zu reinigende Filter weiter durchströmen und in den Schmutzsammelbehälter eintreten, aus welchem sie über die übrigen Filter und die ihnen zugeordneten Absaugleitungen mittels des Saugaggregates abgesaugt werden kann. Daraufhin kann das Schließventil geschlossen werden und bei Bedarf ein weiteres Schließventil geöffnet werden, um ein weiteres Filter abzureinigen.

Als nachteilig hat sich bei dem in der US 2005/0011036 A1 beschriebenen Verfahren erwiesen, dass mittels des Saugaggregates sowohl die über den geöffneten Fremdlufteinlass und das zu reinigende Filter in den Schmutzsammelbehälter eingetretene Fremdluft als auch die durch den Saugschlauch hindurch angesaugte Saugluft abgesaugt werden muss. Strömt Fremdluft in den Schmutzsammelbehälter, hat dies einen unkontrollierbaren Druckanstieg in demselben zur Folge. Dies kann in der Praxis dazu führen, dass der vom Staubsauger bereitgestellte Unterdruck am freien Ende des Saugschlauches nicht mehr ausreicht, um Sauggut anzusaugen.

Dieses Problem tritt insbesondere bei Saugschläuchen mit verhältnismäßig großem Durchmesser, insbesondere größer als 40 mm und beispielsweise 60 mm, auf. Derartige Saugschläuche kommen zum Beispiel beim Absaugen von Bearbeitungswerkzeugen, insbesondere Bohr-, Fräs-, oder Sägaggregaten, zum Einsatz.

Besonders große Ansaugquerschnitte des Saugeinlasses liegen bei Sauggeräten in Form von Kehrsaugmaschinen vor, bei denen sich der unkontrollierbare Druckanstieg im Schmutzsammelbehälter ebenfalls als nachteilig erwiesen hat.

Aufgabe der vorliegenden Erfindung ist es, ein gattungsgemäßes Verfahren sowie ein gattungsgemäßes Sauggerät derart weiterzubilden, dass man ein besseres Saugergebnis erhält.

Diese Aufgabe wird bei einem Verfahren der eingangs genannten Art erfindungsgemäß dadurch gelöst, dass ein erstes Schließventil und ein zweites Schließventil einen ersten Fremdlufteinlass bzw. einen zweiten Fremdlufteinlass in die erste Absaugleitung bzw. die zweite Absaugleitung verschließt, wobei zur Abreinigung des ersten Filters und des zweiten Filters das erste Schließventil bzw. das zweite Schließventil geöffnet wird, um das erste Filter bzw. das zweite Filter reinraumseitig mit Fremdluft zu beaufschlagen, dass zumindest während des Abreinigens des ersten Filters und des zweiten Filters die erste Absaugleitung und die zweite Absaugleitung reinraumseitig relativ zueinander abgedichtet werden und dass in die erste Absaugleitung zum Abreinigen des ersten Filters einströmende Fremdluft weitgehend mit dem ersten Saugaggregat und in die zweite Absaugleitung zum Abreinigen des zweiten Filters einströmende Fremdluft weitgehend mit dem zweiten Saugaggregat abgesaugt wird.

Bei dem erfindungsgemäßen Verfahren kann das erste Filter, wie vorstehend beschrieben, dadurch gereinigt werden, dass das erste Schließventil betätigt wird. Fremdluft kann durch den ersten Fremdlufteinlass in die erste Absaugleitung einströmen und das erste Filter reinraumseitig beaufschlagen. Der aufgrund dieser Beaufschlagung entstehende Druckstoß auf das erste Filter hat sich in der Praxis als wirkungsvoll erwiesen, um Schmutzteilchen vom ersten Filter abzulösen und im Schmutzsammelbehälter abzuscheiden. Demgegenüber ist ein anhaltender Luftstrom, der sich infolge der Differenz des Druckes im Schmutzsammelbehälter und des Druckes in der ersten Absaugleitung von dieser in den Schmutzsammelbehälter hinein ergibt, für das Abreinigungsergebnis von verminderter Bedeutung.

Weil in die erste Absaugleitung das erste Saugaggregat des Sauggerätes geschaltet ist, wird in die erste Absaugleitung einströmende Fremdluft mit Hilfe des ersten Saugaggregates nach dem Auftreten des Druckstoßes zu einem Großteil aus der ersten Absaugleitung abgesaugt. Fremdluft, die von der ersten Absaugleitung durch das erste Filter hindurch in den Schmutzsammelbehälter einströmt, kann mittels des in die zweite Absaugleitung geschalteten zweiten Saugaggregates des Sauggerätes wieder aus dem Schmutzsammelbehälter abgesaugt werden. Die Abdichtung zwischen der ersten Absaugleitung und der zweiten Absaugleitung stellt sicher, dass mittels des zweiten Saugaggregates der Schmutzsammelbehälter weiterhin mit Unterdruck beaufschlagt wird, so dass der Saugbetrieb mittels des zweiten Saugaggregates aufrechterhalten werden kann. Weil der während des Abreinigungsvorganges in den Schmutzsammelbehälter eintretende Anteil der Fremdluft durch den Einsatz des ersten Saugaggregates vermindert werden kann, ergibt sich im Schmutzsammelbehälter beim Abreinigen des Filters ein geringerer Anstieg des Druckes als bei dem gattungsgemäßen Verfahren. Am Saugeinlass steht somit ein größerer Unterdruck zur Verfügung, so dass ein besseres Saugergebnis erzielt werden kann.

Nach dem Abreinigen des ersten Filters kann das erste Schließventil betätigt werden, sofern dies erforderlich ist, um den ersten Fremdlufteinlass zu verschließen. Das zweite Filter kann in entsprechender Weise wie vorstehend für das erste Filter beschrieben abgereinigt werden, indem das zweite Schließventil betätigt wird, so dass Fremdluft durch den zweiten Fremdlufteinlass in die zweite Absaugleitung einströmen kann. Auch in diesem Fall wird durch den Einsatz von zwei Saugaggregaten und die Abdichtung zwischen der ersten Absaugleitung und der zweiten Absaugleitung zumindest während des Abreinigens des zweiten Filters sichergestellt, dass nach dem das zweite Filter abreinigenden Druckstoß einströmende Fremdluft zu einem Großteil durch das zweite Saugaggregat abgesaugt wird. Fremdluft, die von der zweiten Absaugleitung in den Schmutzsammelbehälter einströmt, kann mittels des ersten Saugaggregates durch das erste Filter und die erste Absaugleitung hindurch abgesaugt werden. Verglichen mit dem gattungsgemäßen Verfahren ergibt sich auch in diesem Fall ein geringerer Druckanstieg im Schmutzsammelbehälter und somit am Saugeinlass ein höherer Unterdruck, was zu einem besseren Saugergebnis führt.

Die "Abdichtung" der ersten Absaugleitung relativ zur zweiten Absaugleitung zumindest während des Abreinigens des ersten und des zweiten Filters ist vorliegend nicht dahingehend zu verstehen, dass jeglicher Gasaustausch zwischen der ersten Absaugleitung und der zweiten Absaugleitung selbst auf molekularer Ebene unterbunden ist. Im Rahmen des erfindungsgemäßen Verfahrens ist es ausreichend, wenn die Abdichtung derart beschaffen ist, dass zwischen der ersten Absaugleitung und der zweiten Absaugleitung bei den beim Betrieb eines Sauggerätes üblicherweise auftretenden Gasdrücken kein nennenswerter Gasaustausch stattfindet.

Das Sauggerät kann mehr als zwei Filter, gegebenenfalls mit ihnen zugeordneten Absaugleitungen, aufweisen. Es kann vorgesehen ein, dass auch die weiteren Filter wie voranstehend beschrieben abgereinigt werden. Das erste und das zweite Filter, gegebenenfalls auch weitere Filter, können separate Baueinheiten oder eigenständige Filterbereiche einer Filtereinrichtung sein.

Es kann vorgesehen sein, dass im normalen Saugbetrieb des Sauggerätes, d.h. wenn das erste Filter oder das zweite Filter nicht abgereinigt werden, zwischen der ersten Absaugleitung und der zweiten Absaugleitung eine fluidwirksame Verbindung besteht. Während des Abreinigens der Filter kann diese Verbindung z.B. mittels eines Ventils, etwa eines Klappen-, Magnet- oder Schiebeventils, geschlossen werden, um die Abdichtung sicherzustellen.

Günstig ist es, wenn die erste Absaugleitung und die zweite Absaugleitung reinraumseitig dauerhaft relativ zueinander abgedichtet werden. Dies ermöglicht es, das Verfahren auf einfachere Weise durchzuführen. Insbesondere ist es nicht erforderlich, beim Übergang vom normalen Saugbetrieb des Sauggerätes zum Abreinigen der Filter eine Abdichtung der Absaugleitungen relativ zueinander bereitzustellen. Ein das Verfahren durchführendes Sauggerät kann auf diese Weise mit einer geringeren Zahl an aktiven Elementen auskommen.

Vorzugsweise werden das erste Schließventil und das zweite Schließventil zu unterschiedlichen Zeitpunkten betätigt. Dadurch kann sichergestellt werden, dass beim Betätigen des ersten Schließventils, das das Einströmen von Fremdluft in die erste Absaugleitung zur Folge hat, nicht gleichzeitig Fremdluft in die zweite Absaugleitung aufgrund des ebenfalls betätigten zweiten Schließventils einströmt. Dies hätte einen unerwünschten übermäßigen Druckanstieg im Schmutzsammelbehälter zur Folge, welcher sich somit vermeiden lässt, wenn das erste Schließventil und das zweite Schließventil zu unterschiedlichen Zeitpunkten betätigt werden.

Aus demselben Grund ist es von Vorteil, wenn das erste Schließventil und das zweite Schließventil nicht zu demselben Zeitpunkt geöffnet sind. Vielmehr ist es günstig, wenn zu einem bestimmten Zeitpunkt entweder nur das erste Schließventil oder das zweite Schließventil geöffnet ist, um Fremdluft entweder in die erste Absaugleitung oder in die zweite Absaugleitung zur Abreinigung des ersten Filters bzw. des zweiten Filters einströmen zu lassen.

Bevorzugt werden das erste Schließventil und/oder das zweite Schließventil in vorgebbaren Intervallen betätigt. Dies gibt die Möglichkeit, das erste Filter und/oder das zweite Filter in vorgebbaren Intervallen von Schmutzpartikeln zu reinigen. Saugkraftverluste aufgrund eines mit Schmutzpartikeln zugesetzten ersten Filters und/oder zweiten Filters können auf diese Weise verringert werden, so dass man ein besseres Saugergebnis erhält.

Bei einer Durchführung des Verfahrens hat es sich in der Praxis als günstig erwiesen, wenn das erste Filter und das zweite Filter jeweils in Intervallen von ungefähr 10 bis 30 Sekunden und bevorzugt ca. 15 Sekunden im Wechsel zueinander abgereinigt werden.

Von Vorteil ist es, wenn das erste Schließventil und/oder das zweite Schließventil für vorgebbare Zeitdauern geöffnet werden. Dadurch ist die Möglichkeit gegeben, während einer vorgebbaren Zeitdauer Fremdluft in die erste Absaugleitung und/oder die zweite Absaugleitung einströmen zu lassen, so dass eine Abreinigung des ersten Filters und/oder des zweiten Filters während der vorgebbaren Zeitdauern erfolgen kann. Die Zeitdauern können für das erste Schließventil und das zweite Schließventil unterschiedlich lang sein und beispielsweise vom Grad der Verschmutzung des zu reinigenden Filters abhängen. Bei einer Durchführung des Verfahrens hat es sich in der Praxis als günstig erwiesen, wenn das erste und das zweite Schließventil jeweils ungefähr 50 bis 200 und vorzugsweise ca. 100 Millisekunden geöffnet sind. Ventile, mit denen derartige Schließzeiten erreicht werden können, sind z.B. in den mit den Nummern WO2008/014794 A1 und W02006/108459 A1 veröffentlichten internationalen Patentanmeldungen derselben Anmelderin beschrieben, welche hiermit vollumfänglich zum Inhalt dieser Anmeldung gemacht werden.

Vorteilhafterweise werden das erste Schließventil und/oder das zweite Schließventil elektronisch betätigt. Dadurch kann ein zuverlässiger Ablauf des Verfahrens sichergestellt werden. Zur Ansteuerung des ersten Schließventils und/oder des zweiten Schließventils kann das Sauggerät eine Steuerungs- und/oder Regelungseinheit umfassen. Mit dieser können z.B. Betätigungsintervalle und Öffnungsdauern des ersten und/oder zweiten Schließventils vorgebbar sein.

Bevorzugt werden das erste Schließventil und/oder das zweite Schließventil in Abhängigkeit einer sich zwischen der ersten Absaugleitung und dem Schmutzsammelbehälter bzw. zwischen der zweiten Absaugleitung und dem Schmutzsammelbehälter bildenden Druckdifferenz bei geschlossenem ersten Schließventil bzw. geschlossenem zweiten Schließventil betätigt. Lagern sich Schmutzpartikel am ersten Filter und/oder am zweiten Filter an, steigt die Druckdifferenz zwischen dem Schmutzsammelbehälter und der ersten Absaugleitung bzw. der zweiten Absaugleitung. Es kann vorgesehen sein, dass das erste Schließventil und/oder das zweite Schließventil betätigt werden, wenn diese Druckdifferenz ein vorgebbares Maß überschreitet. Dadurch lässt sich sicherstellen, dass das erste Filter und/oder das zweite Filter rechtzeitig von Schmutzpartikeln gereinigt werden, so dass man insgesamt ein besseres Saugergebnis erhält. Zur Durchführung des Verfahrens kann das Sauggerät mit Drucksensoren ausgestattet sein, z.B. im Schmutzsammelbehälter, in der ersten Absaugleitung und in der zweiten Absaugleitung. Die Drucksensoren können ihre Messwerte an eine Steuerungs- und/oder Regelungseinheit übermitteln, welche dann bedarfsgerecht das erste Schließventil und/oder das zweite Schließventil betätigt.

Wie bereits erwähnt, betrifft die Erfindung auch ein Sauggerät für Reinigungszwecke, insbesondere zur Bodenreinigung, beispielsweise in Form eines Staubsaugers oder einer Kehrsaugmaschine. Bei einem Sauggerät der eingangs genannten Art wird die der Erfindung zugrunde liegende Aufgabe erfindungsgemäß dadurch gelöst, dass das Sauggerät einen ersten Fremdlufteinlass sowie einen zweiten Fremdlufteinlass aufweist, über den Fremdluft in die erste Absaugleitung bzw. in die zweite Absaugleitung einströmen kann zur reinraumseitigen Beaufschlagung des ersten Filters bzw. des zweiten Filters mit Fremdluft und welcher mittels eines ersten Schließventils bzw. eines zweiten Schließventils verschließbar ist , dass die erste Absaugleitung und die zweite Absaugleitung reinraumseitig zumindest während des Abreinigens des ersten Filters und des zweiten Filters relativ zueinander abgedichtet sind und dass in die erste Absaugleitung zum Abreinigen des ersten Filters einströmende Fremdluft weitgehend mit dem ersten Saugaggregat und in die zweite Absaugleitung zum Abreinigen des zweiten Filters einströmende Fremdluft weitgehend mit dem zweiten Saugaggregat absaugbar ist.

Mittels des erfindungsgemäßen Sauggerätes ist es möglich, das vorstehend erläuterte erfindungsgemäße Verfahren durchzuführen. Das Sauggerät weist daher die bereits im Zusammenhang mit der Erläuterung des erfindungsgemäßen Verfahrens erwähnten Vorteile auf. Wird z.B. das erste Filter zum Abreinigen reinraumseitig mit Fremdluft beaufschlagt, so wird diese Fremdluft weitgehend mittels des ersten Saugaggregates aus der ersten Absaugleitung abgesaugt. Fremdluft, die von der ersten Absaugleitung in den Schmutzsammelbehälter strömt, kann über das zweite Filter und die zweite Absaugleitung mittels des zweiten Saugaggregates abgesaugt werden. Aus diesem Grund steigt beim Abreinigen des ersten Filters der Druck im Schmutzsammelbehälter nur geringfügig an, so dass am Saugeinlass ein hinreichender Unterdruck bereitgestellt werden kann. Vorstehende Aussage gilt entsprechend für das Abreinigen des zweiten Filters. Somit lässt sich mit dem erfindungsgemäßen Sauggerät ein verbessertes Saugergebnis erzielen.

Wie bereits erwähnt, kann das Sauggerät mehr als zwei Filter aufweisen, bei denen es sich um eigenständige Baueinheiten oder eigenständige Filterbereiche einer Filtereinrichtung handeln kann.

Günstig ist es, wenn die erste Absaugleitung und die zweite Absaugleitung dauerhaft relativ zueinander abgedichtet sind. Dies ermöglicht eine einfache Konstruktion des Sauggerätes. Es ist insbesondere nicht erforderlich, aktive Elemente wie z. B Ventile vorzusehen, die beim Abreinigen des ersten Filters und des zweiten Filters eine im normalen Saugbetrieb zwischen der ersten Absaugleitung und der zweiten Absaugleitung bestehende fluidwirksame Verbindung verschließen.

Eine konstruktiv einfache dauerhafte Abdichtung der Absaugleitungen relativ zueinander kann dadurch erzielt werden, dass die erste Absaugleitung und die zweite Absaugleitung als räumlich voneinander getrennte Absaugkanäle ausgebildet sind.

Bevorzugt weist das Sauggerät ein Gehäuse mit einem ersten Gehäuseteil auf, das die erste Absaugleitung und/oder die zweite Absaugleitung zumindest teilweise ausbildet. Dies ermöglicht eine konstruktiv einfache Ausgestaltung des Sauggerätes. Das Gehäuse des Sauggerätes und insbesondere dessen erstes Gehäuseteil kann z.B. einstückig ausgebildet sein und aus einem Kunststoffmaterial gefertigt sein. Es ist möglich, dass das erste Gehäuseteil Wandungen der ersten und/oder der zweiten Absaugleitung zumindest teilweise ausbildet.

Vorzugsweise weist das Sauggerät ein Gehäuse mit einem zweiten Gehäuseteil auf, das zumindest teilweise eine Wandung zumindest eines Fremdluftkanals ausbildet, der über den ersten Fremdlufteinlass in die erste Absaugleitung und/oder über den zweiten Fremdlufteinlass in die zweite Absaugleitung mündet. Dies ermöglicht eine einfache konstruktive Ausgestaltung des Sauggerätes. Das zweite Gehäuseteil, das z.B. einstückig ausgebildet ist und aus einem Kunststoffformteil gebildet sein kann, kann so am übrigen Gehäuse des Sauggerätes angeordnet sein, dass zwischen diesem und dem zweiten Gehäuseteil ein Fremdluftkanal definiert wird. Das zweite Gehäuseteil bildet zumindest teilweise eine Wandung des Fremdluftkanals, durch welchen hindurch bei geöffnetem ersten Schließventil Fremdluft in die erste Absaugleitung und bei geöffnetem zweiten Schließventil Fremdluft in die zweite Absaugleitung einströmen kann.

Von Vorteil ist es, wenn das erste Schließventil und/oder das zweite Schließventil am zweiten Gehäuseteil gehalten sind, welches von einer Betriebsstellung, in der das zweite Gehäuseteil das erste Filter und/oder das zweite Filter überdeckt, in eine Wartungsstellung, in der das erste Filter und/oder das zweite Filter frei zugänglich sind, und umgekehrt überführbar ist. Dies ermöglicht eine einfache Wartung des Sauggerätes. Gelegentlich kann es erforderlich sein, das erste Filter und/oder das zweite Filter auszutauschen. Bei der vorliegenden Ausführungsform kann dies dadurch erfolgen, dass das zweite Gehäuseteil zusammen mit dem daran gehaltenen ersten Schließventil und/oder zweiten Schließventil von der Betriebsstellung in die Wartungsstellung überführt wird, so dass einem Benutzer das erste Filter und/oder das zweite Filter frei zugänglich ist. Nach dem Austausch des entsprechenden Filters kann das zweite Gehäuseteil wieder in die Betriebsstellung überführt werden und der Saugbetrieb fortgesetzt werden.

Eine zuverlässige Funktion des ersten Schließventils und/oder des zweiten Schließventils kann dadurch sichergestellt werden, dass das erste Schließventil und/oder das zweite Schließventil einen gerätefesten ersten Ventilsitz bzw. zweiten Ventilsitz sowie einen relativ dazu beweglichen ersten Ventilkörper bzw. zweiten Ventilkörper aufweisen, der in einer Schließstellung am ersten Ventilsitz bzw. am zweiten Ventilsitz dichtend anliegt und in einer Öffnungsstellung vom ersten Ventilsitz bzw. vom zweiten Ventilsitz angehoben ist. Der erste Ventilsitz und/oder der zweite Ventilsitz bilden dabei den ersten Fremdlufteinlass bzw. den zweiten Fremdlufteinlass aus.

Bevorzugt umfassen das erste Schließventil und/oder das zweite Schließventil ein erstes Rückstellglied bzw. ein zweites Rückstellglied, entgegen dessen Wirkung der erste Ventilkörper bzw. der zweite Ventilkörper von der Schließstellung in die Öffnungsstellung überführbar ist. Der erste und/oder der zweite Ventilkörper nehmen in der Schließstellung eine Grundstellung ein. Es bedarf einer Kraftbeaufschlagung, um den ersten und/oder den zweiten Ventilkörper in die Öffnungsstellung zu überführen und dadurch das Einströmen von Fremdluft in die erste bzw. die zweite Absaugleitung zu ermöglichen. Die Kraftbeaufschlagung kann z.B. aufgrund der Druckdifferenz zwischen der Atmosphärendruck aufweisenden Fremdluft und der Unterdruck aufweisenden Luft in der ersten bzw. der zweiten Absaugleitung erfolgen.

Um sicherzustellen, dass sich in diesem Fall das erste Schließventil und/oder das zweite Schließventil nicht selbsttätig aufgrund der Druckdifferenz öffnet, ist es von Vorteil, wenn das erste Schließventil und/oder das zweite Schließventil einen ersten Elektromagneten bzw. einen zweiten Elektromagneten umfassen, durch dessen Wirkung der erste Ventilkörper bzw. der zweite Ventilkörper in der Schließstellung gehalten ist. Während des normalen Saugbetriebes des Sauggerätes kann der Elektromagnet des ersten und/oder des zweiten Schließventils eingeschaltet sein, um den ersten Ventilkörper bzw. den zweiten Ventilkörper in der Schließstellung zu halten. Zum Abreinigen des ersten und/oder des zweiten Filters kann der Elektromagnet abgeschaltet werden, so dass der erste Ventilkörper bzw. der zweite Ventilkörper von der Schließstellung in die Öffnungsstellung überführt wird und Fremdluft einströmen kann. Aufgrund des dadurch erfolgenden Druckausgleiches zwischen dem Atmosphärendruck und dem Druck in der ersten und/oder der zweiten Absaugleitung kann der erste Ventilkörper bzw. der zweite Ventilkörper mittels des ersten Rückstellgliedes bzw. des zweiten Rückstellgliedes wieder von der Öffnungsstellung in die Schließstellung überführt werden. Daraufhin kann der Elektromagnet erneut eingeschaltet werden und der normale Saugbetrieb wieder aufgenommen werden.

Vorzugsweise umfasst das Sauggerät eine mit dem ersten Schließventil und/oder dem zweiten Schließventil in elektrischer Verbindung stehende Steuerungs- und/oder Regelungseinheit, mit der das erste Schließventil bzw. das zweite Schließventil ansteuerbar sind. Dadurch kann eine zuverlässige Funktion des Sauggerätes sichergestellt werden. Mittels der Steuerungs- und/oder Regelungseinheit können das erste und/oder das zweite Schließventil z.B. in vorgebbaren Intervallen betätigt oder für vorgebbare Zeitdauern geöffnet werden. Dadurch lässt sich eine bedarfsgerechte und zuverlässige Abreinigung des ersten und/oder des zweiten Filters erzielen.

Wie bereits erwähnt, kann vorgesehen sein, dass das Sauggerät Drucksensoren im Schmutzsammelbehälter und/oder in der ersten Absaugleitung und/oder in der zweiten Absaugleitung aufweist, die mit der Steuerungs- und/oder Regelungseinheit in Verbindung stehen und auf Basis deren Messwerte das erste und/oder das zweite Schließventil betätigt werden.

Günstig ist es, wenn das erste Saugaggregat und das zweite Saugaggregat und/oder die erste Absaugleitung und die zweite Absaugleitung und/oder das erste Schließventil und das zweite Schließventil, bezogen auf eine Mittellängsebene des Sauggerätes, relativ zueinander symmetrisch am Sauggerät angeordnet sind. Eine symmetrische Anordnung möglichst vieler Bauelemente des Sauggerätes ermöglicht es, dessen Schwerpunkt möglichst nahe der Mittellängsebene und bevorzugt in der Mittellängsebene anzuordnen. Es hat sich gezeigt, dass dadurch eine verbesserte Standfestigkeit und ein geräuscharmer Lauf des Sauggerätes erzielt werden kann.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Darstellung einer ersten bevorzugten Ausführungsform eines erfindungsgemäßen Sauggerätes im normalen Saugbetrieb;
- Figur 2:: das Sauggerät aus Figur 1 beim Abreinigen eines ersten Filters;
- Figur 3:: das Sauggerät aus Figur 1 beim Abreinigen eines zweiten Filters;
- Figur 4:: eine Schnittansicht eines Oberteils einer zweiten bevorzugten Ausführungsform eines erfindungsgemäßen Sauggerätes und
- Figur 5:: eine Schnittansicht längs der Linie 5-5 in Figur 4.

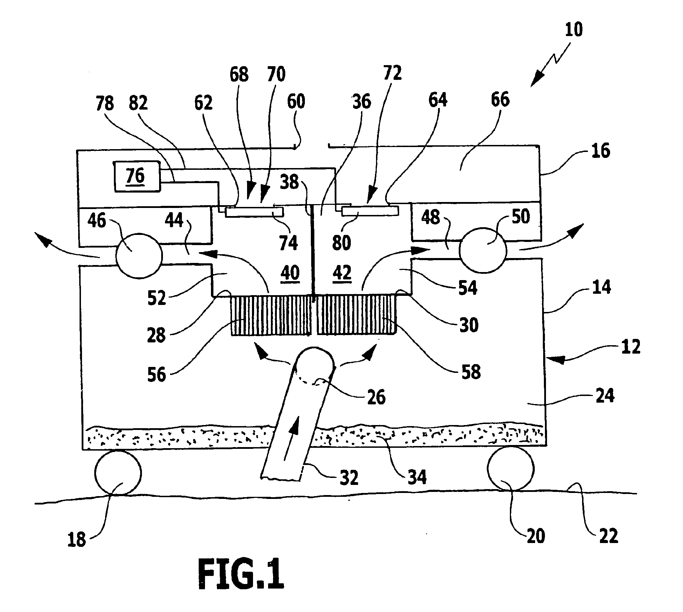

Eine erste bevorzugte Ausführungsform eines erfindungsgemäßen Sauggerätes ist in Form eines Staubsaugers ausgebildet, in den Figuren 1 bis 3 schematisch dargestellt und dort mit dem Bezugszeichen 10 belegt. Der Staubsauger 10 weist ein Gehäuse 12 auf mit einem Gehäuseunterteil 14 sowie einem darauf aufgesetzten Gehäuseoberteil 16. Am Gehäuseunterteil 14 sind Rollen 18 und 20 gehalten, die zum Verfahren des Staubsauges 10 auf einer Aufstellfläche 22 dienen.

Das Gehäuseunterteil 14 ist als Hohlkörper ausgestaltet und bildet einen Schmutzsammelbehälter 24 des Staubsaugers 10 aus mit einem Saugeinlass 26 sowie einem ersten Saugauslass 28 und einem zweiten Saugauslass 30, die jeweils in Form von Durchbrechungen des Gehäuseunterteils 14 gebildet sind. An den Saugeinlass 26 ist ein Saugschlauch 32 lösbar angeschlossen, an dessen dem Schmutzsammelbehälter 24 abgewandten und in der Zeichnung nicht dargestellten freien Ende in bekannter und deswegen nicht näher erläuterter Weise ein Saugwerkzeug angeschlossen werden kann. Bei dem Saugwerkzeug kann es sich beispielsweise um eine Bodendüse oder ein Bearbeitungswerkzeug wie ein Bohr-, Säg- oder Fräsaggregat handeln. Durch Unterdruckbeaufschlagung des Schmutzsammelbehälters 24 in nachfolgend beschriebener Weise kann Sauggut 34, wie z.B. Schmutz oder Flüssigkeiten, durch den Saugschlauch 32 hindurch vom Staubsauger 10 angesaugt und im Schmutzsammelbehälter 24 abgeschieden werden.

Oberhalb der Saugauslässe 28 und 30 ist zwischen dem Gehäuseunterteil 14 und dem Gehäuseoberteil 16 ein Absaugraum 36 gebildet, der mittels einer vertikal verlaufenden gasdichten Zwischenwand 38 in einen ersten Raumbereich 40 und einen zweiten Raumbereich 42 unterteilt ist. Der erste Raumbereich 40 ist mit einem im Gehäuseunterteil 14 gebildeten ersten Strömungskanal 44 verbunden, in den ein erstes Saugaggregat 46 geschaltet ist. In entsprechender Weise ist der zweite Raumbereich 42 mit einem im Gehäuseunterteil 14 gebildeten zweiten Strömungskanal 48 verbunden, in den ein zweites Saugaggregat 50 geschaltet ist. Der erste Raumbereich 40 und der diesem zugewandte Abschnitt des ersten Strömungskanals 44 bilden eine erste Absaugleitung 52, und der zweite Raumbereich 42 sowie der diesem zugewandte Abschnitt des zweiten Strömungskanals 48 bilden eine zweite Absaugleitung 54.

In den Saugauslass 28 ist ein erstes Filter 56 eingesetzt, und in den Saugauslass 30 ist ein zweites Filter 58 eingesetzt. Bei den Filtern 56 und 58 kann es sich z.B. um Flachfaltenfilter aus einem Papier- oder Polyestermaterial handeln. Bei den Filtern 56 und 58 handelt es sich um separate Baueinheiten. Es kann vorgesehen sein, dass die Filter 56 und 58 bei einer Variante des Staubsaugers 10 als eigenständige Filterbereiche einer Filtereinrichtung ausgebildet sind.

Das Gehäuseoberteil 16 ist als Hohlkörper ausgebildet. An seiner Oberseite weist es eine Eintrittsöffnung 60 für Luft aus der Atmosphäre auf. An seiner Unterseite weist es eine als erster Fremdlufteinlass 62 bezeichnete erste Durchbrechung sowie eine als zweiter Fremdlufteinlass 64 bezeichnete zweite Durchbrechung auf. Das Gehäuseoberteil 16 bildet auf diese Weise einen als Fremdluftkanal 66 bezeichneten Hohlkörper, der über die Eintrittsöffnung 60 in die Atmosphäre mündet und der über den ersten Fremdlufteinlass 62 in die erste Absaugleitung 52 und über den zweiten Fremdlufteinlass 64 in die zweite Absaugleitung 54 mündet.

Der Staubsauger 10 umfasst eine Ventileinrichtung 68 mit einem ersten Schließventil 70 und einem zweiten Schließventil 72 zum Verschließen und Freigeben des ersten Fremdlufteinlasses 62 bzw. des zweiten Fremdlufteinlasses 64. Das erste Schließventil 70 umfasst hierfür einen ersten Ventilkörper 74, der in einer Schließstellung an dem einen ersten Ventilsitz bildenden ersten Fremdlufteinlass 62 unterseitig am Gehäuseoberteil 16 dichtend anliegt. In der Schließstellung des ersten Ventilkörpers 74 ist eine Strömungsverbindung zwischen der ersten Absaugleitung 52 und dem Fremdluftkanal 66 unterbrochen. Durch Betätigen des ersten Schließventils 70 kann der erste Ventilkörper 74 von der Schließstellung in eine Öffnungsstellung überführt werden, bei der er vom ersten Fremdlufteinlass 62 angehoben ist. In der Öffnungsstellung besteht eine Strömungsverbindung zwischen der ersten Absaugleitung 52 und dem Fremdluftkanal 66.

Zur Betätigung des ersten Schließventils 70 umfasst der Staubsauger 10 eine Steuerungs- und/oder Regelungseinheit 76, die über eine Leitung 78 mit dem ersten Schließventil 70 verbunden ist.

In entsprechender Weise weist das zweite Schließventil 72 einen zweiten Ventilkörper 80 auf, der eine Schließstellung einnehmen kann, bei der er dichtend an dem einen zweiten Ventilsitz bildenden zweiten Fremdlufteinlass 64 untenseitig am Gehäuseoberteil 16 dichtend anliegt. In der Schließstellung des zweiten Ventilkörpers 80 besteht zwischen dem Fremdluftkanal 66 und der zweiten Absaugleitung 54 keine Strömungsverbindung. Der zweite Ventilkörper 80 kann durch Betätigen des zweiten Schließventils 72 in eine Öffnungsstellung überführt werden, in welcher er vom zweiten Fremdlufteinlass 64 angehoben ist. Dadurch kann eine Strömungsverbindung zwischen dem Fremdluftkanal 66 und der zweiten Absaugleitung 54 bereitgestellt werden. Das zweite Schließventil 72 kann ebenfalls mittels der Steuerungs- und/oder Regelungseinheit 76 betätigt werden, mit welcher es über eine Leitung 82 verbunden ist.

In dem in Figur 1 dargestellten normalen Saugbetrieb des Staubsaugers 10 wird der Schmutzsammelbehälter 24 mittels des ersten Saugaggregates 46 durch die erste Absaugleitung 52 und das erste Filter 56 hindurch mit Unterdruck beaufschlagt. In entsprechender Weise wird der Schmutzsammelbehälter 24 durch das zweite Saugaggregat 50 durch die zweite Absaugleitung 54 und das zweite Filter 58 hindurch mit Unterdruck beaufschlagt. Das erste Schließventil 70 und das zweite Schließventil 72 sind im normalen Saugbetrieb geschlossen, so dass keine über die Eintrittsöffnung 60 in den Fremdluftkanal 66 eintretende Fremdluft durch den ersten Fremdlufteinlass 62 und den zweiten Fremdlufteinlass 64 hindurch in die erste Absaugleitung 52 bzw. die zweite Absaugleitung 54 eintreten kann. Durch den Unterdruck im Schmutzsammelbehälter 24 kann, wie bereits erwähnt, Sauggut 34 durch den Saugschlauch 32 hindurch in den Schmutzsammelbehälter 24 eingesaugt und dort abgeschieden werden.

Bei fortdauerndem Saugbetrieb und insbesondere bei hohem Schmutzeintrag am freien Ende des Saugschlauches 32 können sich Schmutzpartikel an den Filtern 56 und 58 anlagern und dadurch den Durchtritt von Saugluft durch diese hindurch beeinträchtigen. Von den Saugaggregaten 46 und 50 kann dadurch weniger Saugluft aus dem Schmutzsammelbehälter 24 abgesaugt werden, was einen Druckanstieg im Schmutzsammelbehälter 24 zur Folge hat und die Saugwirkung am freien Ende des Saugschlauches 32 verringert.

Um die Filter 56 und 58 abzureinigen, d.h. von deren anhaftenden Schmutzpartikeln zu befreien, kann folgendermaßen vorgegangen werden:
Mittels der Steuerungs- und/oder Regelungseinheit 76 können die Schließventile 70 und 72 betätigt werden. Es wird im Folgenden angenommen, dass zunächst das erste Schließventil 70 und danach das zweite Schließventil 72 betätigt wird.

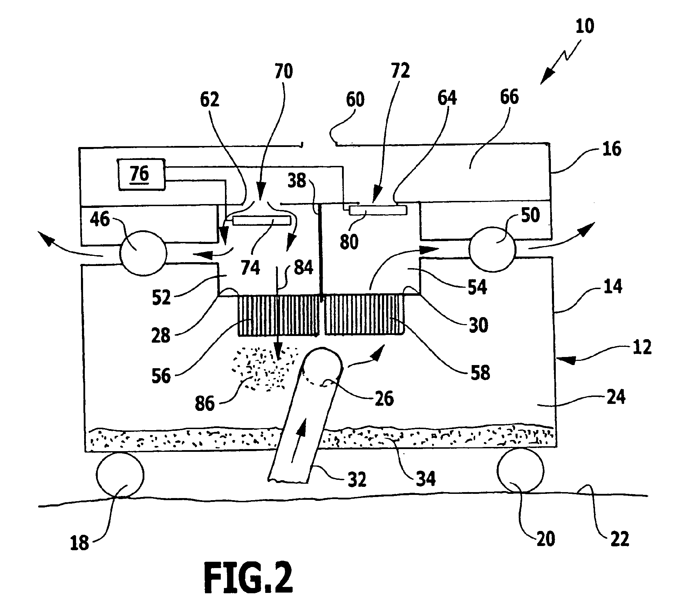

Beim Betätigen des ersten Schließventils 70 wird der erste Ventilkörper 74 von der Schließstellung in die Öffnungsstellung überführt (Figur 2). Da in der ersten Absaugleitung 52 relativ zur Atmosphäre ein Unterdruck herrscht, kann über die Eintrittsöffnung 60 in den Fremdluftkanal 66 eintretende Fremdluft durch den ersten Fremdlufteinlass 62 hindurch in die erste Absaugleitung 52 einströmen, um das erste Filter 56 reinraumseitig mit Fremdluft zu beaufschlagen. Die einströmende Fremdluft führt zu einer Druckdifferenz zwischen der Luft im Schmutzsammelbehälter 24 und der Luft in der ersten Absaugleitung 52, so dass das erste Filter 56 einen auf den Schmutzsammelbehälter 24 gerichteten und in Figur 2 durch einen Pfeil 84 dargestellten Druckstoß erfährt. Durch diesen Druckstoß lösen sich am ersten Filter 56 anhaftende Schmutzpartikel 86, die im Schmutzsammelbehälter 24 abgeschieden werden.

Die in die erste Absaugleitung 52 einströmende Fremdluft wird weitgehend mittels des ersten Saugaggregates 46 abgesaugt. Der Anteil an Fremdluft, der von der ersten Absaugleitung 52 durch das erste Filter 56 hindurch in den Schmutzsammelbehälter 24 einströmt, ist demgegenüber eher gering. Für das Abreinigen des ersten Filters 56 ist eine dauerhafte Fremdluftströmung von der ersten Absaugleitung 52 in den Schmutzsammelbehälter 24 im Übrigen von verminderter Bedeutung, weil die Abreinigung des ersten Filters 56 im Wesentlichen durch den sich ausbildenden Druckstoß erfolgt.

Aufgrund der verhältnismäßig geringen Menge an in den Schmutzsammelbehälter 24 eintretender Fremdluft ergibt sich in diesem nur ein geringer Druckanstieg, zumal der Schmutzsammelbehälter 24 weiterhin vom zweiten Saugaggregat 50 mit Unterdruck beaufschlagt wird. Die in den Schmutzsammelbehälter 24 eingetretene Fremdluft kann mittels des zweiten Saugaggregates 50 wirksam aus dem Schmutzsammelbehälter 24 abgesaugt werden. Die Abdichtung zwischen der ersten Absaugleitung 52 und der zweiten Absaugleitung 54 infolge der Zwischenwand 38 stellt sicher, dass in die erste Absaugleitung 52 eingeströmte Fremdluft nicht unmittelbar unter Umgehung des Schmutzsammelbehälters 24 vom zweiten Saugaggregat 50 abgesaugt wird.

Nach dem Gesagten ergibt sich bei dem Abreinigen des ersten Filters 56 nur ein verhältnismäßig geringer Druckanstieg im Schmutzsammelbehälter 24, so dass am Saugeinlass 26 und damit auch am freien Ende des Saugschlauches 52 weiterhin wirkungsvoll Unterdruck bereitgestellt werden kann. Auf diese Weise lässt sich ein verbessertes Saugergebnis erzielen.

Nach dem Abreinigen des ersten Filters 56 kann das erste Schließventil 70 geschlossen werden, d.h. der erste Ventilkörper 74 von der Öffnungsstellung in die Schließstellung überführt werden, und der normale Saugbetrieb in der in Figur 1 dargestellten Weise fortgesetzt werden.

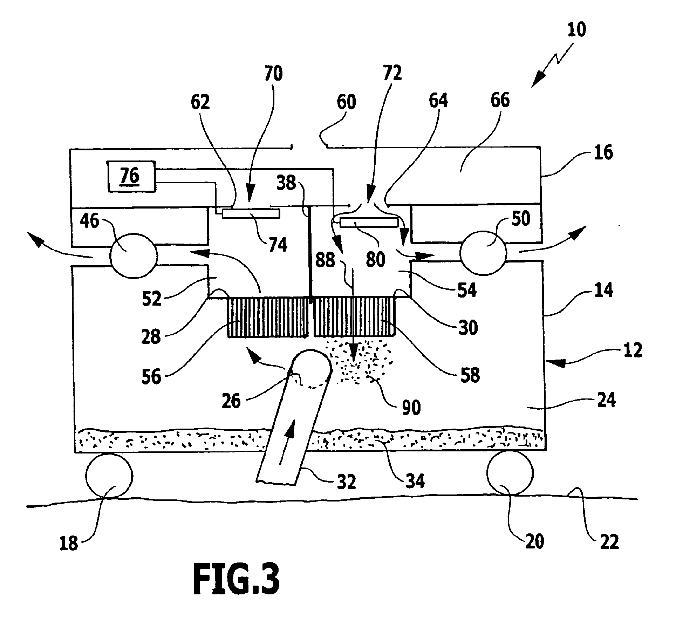

In entsprechender Weise wie für das erste Filter 56 vorstehend beschrieben kann das zweite Filter 58 abgereinigt werden (Figur 3). Hierfür wird mittels der Steuerungs- und/oder Regelungseinheit 76 das zweite Schließventil 72 betätigt, so dass der zweite Ventilkörper 80 vom zweiten Fremdlufteinlass 64 angehoben wird. Fremdluft kann durch den zweiten Fremdlufteinlass 64 in die zweite Absaugleitung 54 einströmen und das zweite Filter 58 reinraumseitig beaufschlagen. Aufgrund der Druckdifferenz zwischen der Luft im Schmutzsammelbehälter 24 und der Luft in der zweiten Absaugleitung 54 erfährt das zweite Filter 58 einen in Figur 3 mit einem Pfeil 88 dargestellten und auf den Schmutzsammelbehälter 24 gerichteten Druckstoß, so dass am zweiten Filter 58 anhaftende Schmutzpartikel 90 sich von diesem ablösen und im Schmutzsammelbehälter 24 abgeschieden werden.

Die in die zweite Absaugleitung 54 einströmende Fremdluft wird weitgehend mittels des zweiten Saugaggregates 50 abgesaugt, und der in den Schmutzsammelbehälter 24 durch das zweite Filter 58 hindurch eintretende Anteil an Fremdluft kann mittels des ersten Saugaggregates 46 aus dem Schmutzsammelbehälter 24 abgesaugt werden. Durch die Abdichtung zwischen der ersten Absaugleitung 52 und der zweiten Absaugleitung 54 mittels der Zwischenwand 38 wird sichergestellt, dass in die zweite Absaugleitung 54 einströmende Fremdluft vom ersten Saugaggregat 46 nicht unmittelbar unter Umgehung des Schmutzsammelbehälters 24 abgesaugt wird.

Auch beim Abreinigen des zweiten Filters 58 steigt somit der Druck im Schmutzsammelbehälter 24 nur geringfügig an, so dass am freien Ende des Saugschlauches 32 wirkungsvoll Unterdruck bereitgestellt werden kann, so dass sich insgesamt ein verbessertes Saugergebnis ergibt.

Bei einer Umsetzung des in den Figuren 1 bis 3 gezeigten Staubsaugers hat es sich als vorteilhaft erwiesen, wenn die Filter 56 und 58 in regelmäßigen Intervallen von ca. 10 bis 30 Sekunden und bevorzugt ungefähr 15 Sekunden abgereinigt werden. Die Schließventile 70 und 72 sind vorzugsweise ungefähr 50 bis 200 Millisekunden und noch bevorzugter ungefähr 100 Millisekunden geöffnet. Sie sind vorzugsweise elektromagnetisch betätigbar oder als Magnetventile ausgestattet, die von der Steuerungs- und/oder Regelungseinheit 76 elektronisch ansteuerbar sind. Ein derartiges Schließventil, mit dem Öffnungszeiten von ca. 100 Millisekunden bewerkstelligt werden können, ist z.B. in den unter der Nummer WO2008/014794 A1 und WO2006/108459 A1 veröffentlichten internationalen Patentanmeldungen derselben Anmelderin beschrieben. Die Inhalte dieser veröffentlichten internationalen Anmeldungen werden zum Inhalt der vorliegenden Patentanmeldung gemacht.

Eine Variante des Staubsaugers 10 kann mehr als zwei Filter aufweisen. Es kann vorgesehen sein, dass auch die weiteren Filter wie voranstehend beschrieben abgereinigt werden können.

Vorliegend sind die Schließventile 70 und 72 an dem Gehäuseoberteil 16 gehalten, welches in der Zeichnung eine Betriebsstellung einnimmt, bei dem die Filter 56 und 58 vom Gehäuseoberteil 16 überdeckt sind. Das Gehäuseoberteil 16 kann auf einfache, in der Zeichnung nicht dargestellte Weise vom Gehäuseunterteil 14 abgenommen werden, d.h. in eine Wartungsstellung überführt werden. In der Wartungsstellung kann ein Benutzer in den Absaugraum 36 eingreifen, so dass die Filter 56 und 58 frei zugänglich sind. Dies ermöglicht einen einfachen Wechsel der Filter 56 und 58. Nach dem Einsetzen eines neuen Filters kann das Gehäuseoberteil 16 wieder von der Wartungsstellung in die Betriebsstellung überführt werden, d.h. auf das Gehäuseunterteil 14 aufgesetzt werden, und der normale Saugbetrieb kann fortgesetzt werden.

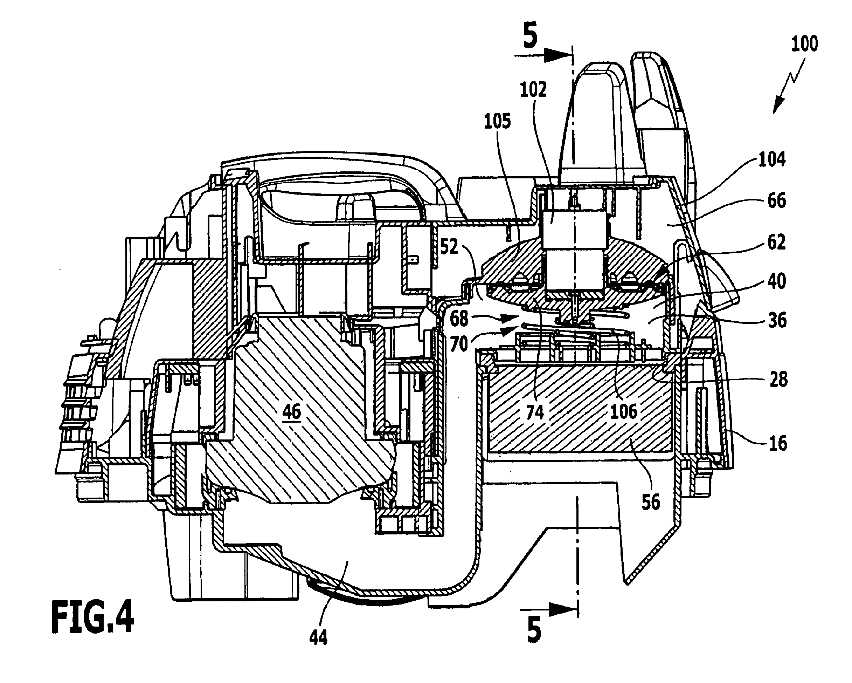

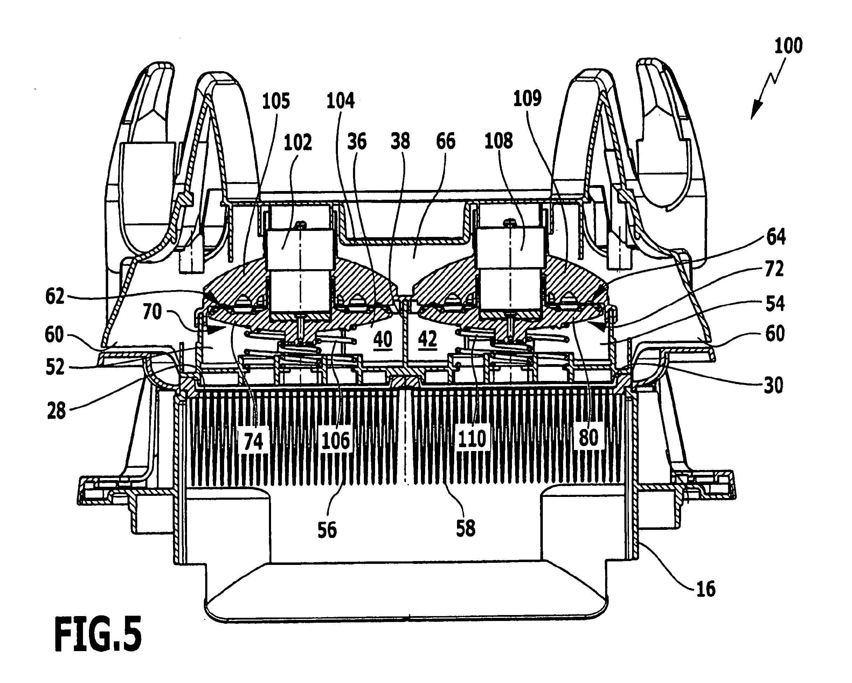

Das Gehäuseoberteil einer zweiten Ausführungsform eines erfindungsgemäßen Sauggerätes in Form eines Staubsaugers mit dem Bezugszeichen 100 ist in den Figuren 4 und 5 jeweils in Schnittdarstellung gezeigt und dort mit dem Bezugszeichen 16 belegt. Bauteile und Merkmale des Staubsaugers 100, die gleich oder gleichwirkend zu Bauteilen oder Merkmalen des Staubsaugers 10 sind, sind mit denselben Bezugszeichen versehen.

Das Gehäuseoberteil 16 des Staubsaugers 100 kann auf ein an sich bekanntes und deswegen in den Figuren 4 und 5 nicht dargestelltes geeignetes Gehäuseunterteil aufgesetzt werden, um den Staubsauger 100 insgesamt auszubilden. Ein derartiges Gehäuseunterteil ist beispielsweise in den unter den Nummern WO2006/108459 A1 und WO2008/014794 A1 veröffentlichten internationalen Patentanmeldungen derselben Anmelderin offenbart.

Bei dem Staubsauger 100 sind das erste Saugaggregat 46 und das in der Zeichnung nicht gezeigte zweite Saugaggregat 50 am Gehäuseoberteil 16 gehalten. Die Absaugleitungen 52 und 54 werden durch das Gehäuseoberteil 16 ausgebildet. Der oberhalb der Filter 56 und 58 gebildete Absaugraum 36 ist wie im Fall des Staubsaugers 10 durch die Zwischenwand 38 dauerhaft in zwei voneinander abgedichtete Raumbereiche 40 als Teil der ersten Absaugleitung 52 sowie 42 als Teil der zweiten Absaugleitung 54 getrennt.

Das erste Schließventil 70 und das zweite Schließventil 72 sind jeweils als elektromagnetisches Ventil ausgestaltet, wie es beispielsweise in den unter der Nummer W02006/108459 A1 und W02008/014794 A1 veröffentlichten internationalen Patentanmeldungen derselben Anmelderin beschrieben ist. Das erste Schließventil 70 umfasst einen Elektromagneten 102, welcher im normalen Saugbetrieb des Staubsaugers 100 bestromt ist, um den ersten Ventilkörper 74 in der Schließstellung zu halten. Zum Betätigen des ersten Schließventils 70 wird die Stromzufuhr zum Elektromagneten 102 mittels der in den Figuren 4 und 5 nicht gezeigten Steuerungs- und/oder Regelungseinheit 76 unterbrochen. Dies hat zur Folge, dass aufgrund der Druckdifferenz zwischen der Luft in der ersten Absaugleitung 52 und der Luft im Fremdluftkanal 66, welcher unterhalb eines Deckelteils 104 des Gehäuseoberteils 16 gebildet ist, der erste Ventilkörper 74 obenseitig mit Druckluft beaufschlagt wird. Dies erlaubt es, den ersten Ventilkörper 74 in die Öffnungsstellung zu überführen, bei der er vom ersten Fremdlufteinlass 62 in Richtung des ersten Filters 56 angehoben wird. Der erste Fremdlufteinlass 62 ist dabei an einer den Elektromagneten 102 ringförmig umgebenden Ventilhalterung 105 gebildet. Wie vorstehend beschrieben bildet sich ein das erste Filter 56 beaufschlagender Druckstoß, um dieses abzureinigen.

Die Bewegung des ersten Ventilkörpers 74 von der Schließstellung in die Öffnungsstellung erfolgt entgegen der Wirkung eines Rückstellgliedes 106 des ersten Schließventils 70. Das Rückstellglied 106 ist in Form einer Schraubenfeder gebildet und dient der Überführung des ersten Ventilkörpers 74 von der Öffnungsstellung in die Schließstellung. Gelangt der erste Ventilkörper 74 erneut zur Anlage am ersten Fremdlufteinlass 62, wird der Elektromagnet 102 mittels der Steuerungs- und/oder Regelungseinheit 76 wieder bestromt und somit der erste Ventilkörper 74 wieder in der Schließstellung gehalten.

In entsprechender Weise umfasst das zweite Schließventil 72 einen Elektromagneten 108, um den zweiten Ventilkörper 80 in der zweiten Schließstellung zu halten, sowie ein zweites Rückstellglied 110 in Form einer Schraubenfeder, um den zweiten Ventilkörper 80 von der Öffnungsstellung in die Schließstellung zu überführen. Der zweite Fremdlufteinlass 64 ist dabei an einer den Elektromagneten 108 ringförmig umgebenden Ventilhalterung 109 gebildet.

Auch mit dem Staubsauger 100 lassen sich das erste Filter 56 und das zweite Filter 58 auf die im Zusammenhang mit der Erläuterung des Staubsaugers 10 beschriebene Weise wirkungsvoll abreinigen und gleichzeitig in dem in der Zeichnung nicht gezeigten Schmutzsammelbehälter 24 des Staubsaugers 100 ein hinreichender Unterdruck bereitstellen, um ein verbessertes Saugergebnis zu erhalten.

## Patentansprüche

1. Verfahren zum Abreinigen eines ersten Filters und eines zweiten Filters eines Sauggerätes für Reinigungszwecke, das einen Schmutzsammelbehälter mit einem Saugeinlass aufweist, wobei der Schmutzsammelbehälter über das erste Filter und das zweite Filter sowie eine sich daran anschließende erste Absaugleitung bzw. zweite Absaugleitung mit Unterdruck beaufschlagt wird, wobei der Schmutzsammelbehälter über die erste Absaugleitung und das erste Filter mit Hilfe eines ersten Saugaggregates des Sauggerätes sowie über die zweite Absaugleitung und das zweite Filter mit Hilfe eines zweiten Saugaggregates des Sauggerätes mit Unterdruck beaufschlagt wird, **dadurch gekennzeichnet, dass** ein erstes Schließventil und ein zweites Schließventil einen ersten Fremdlufteinlass bzw. einen zweiten Fremdlufteinlass in die erste Absaugleitung bzw. die zweite Absaugleitung verschließt, wobei zur Abreinigung des ersten Filters und des zweiten Filters das erste Schließventil bzw. das zweite Schließventil geöffnet wird, um das erste Filter bzw. das zweite Filter reinraumseitig mit Fremdluft zu beaufschlagen, dass zumindest während des Abreinigens des ersten Filters und des zweiten Filters die erste Absaugleitung und die zweite Absaugleitung reinraumseitig relativ zueinander abgedichtet werden und dass in die erste Absaugleitung zum Abreinigen des ersten Filters einströmende Fremdluft weitgehend mit dem ersten Saugaggregat und in die zweite Absaugleitung zum Abreinigen des zweiten Filters einströmende Fremdluft weitgehend mit dem zweiten Saugaggregat abgesaugt wird.

2. Verfahren nach Anspruch 1, **dadurch gekennzeichnet, dass** die erste Absaugleitung und die zweite Absaugleitung reinraumseitig dauerhaft relativ zueinander abgedichtet werden.

3. Verfahren nach Anspruch 1 oder 2, **dadurch gekennzeichnet, dass** das erste Schließventil und das zweite Schließventil zu unterschiedlichen Zeitpunkten betätigt werden.

4. Verfahren nach einem der voranstehenden Ansprüche, **dadurch gekennzeichnet, dass** das erste Schließventil und das zweite Schließventil nicht zu demselben Zeitpunkt geöffnet sind.

5. Verfahren nach einem der voranstehenden Ansprüche, **dadurch gekennzeichnet, dass** das erste Schließventil und/oder das zweite Schließventil in vorgebbaren Intervallen betätigt werden.

6. Verfahren nach einem der voranstehenden Ansprüche, **dadurch gekennzeichnet, dass** das erste Schließventil und/oder das zweite Schließventil für vorgebbare Zeitdauern geöffnet werden.

7. Verfahren nach einem der voranstehenden Ansprüche, **dadurch gekennzeichnet, dass** das erste Schließventil und/oder das zweite Schließventil elektronisch betätigt werden.

8. Verfahren nach einem der voranstehenden Ansprüche, **dadurch gekennzeichnet, dass** das erste Schließventil und/oder das zweite Schließventil in Abhängigkeit einer sich zwischen der ersten Absaugleitung und dem Schmutzsammelbehälter bzw. zwischen der zweiten Absaugleitung und dem Schmutzsammelbehälter bildenden Druckdifferenz bei geschlossenem ersten Schließventil bzw. geschlossenem zweiten Schließventil betätigt werden.

9. Sauggerät für Reinigungszwecke zur Durchführung des Verfahrens nach einem der voranstehenden Ansprüche mit einem Schmutzsammelbehälter (24), der einen Saugeinlass (26) aufweist, wobei das Sauggerät (10; 100) an einem ersten Saugauslass (28) ein erstes Filter (56) und an einem zweiten Saugauslass (30) ein zweites Filter (58) aufweist, an welche sich eine erste Absaugleitung (52) bzw. eine zweite Absaugleitung (54) anschließen, über welche der Schmutzsammelbehälter (24) mit Unterdruck beaufschlagbar ist, und wobei das Sauggerät (10; 100) ein erstes Saugaggregat (46) zur Unterdruckbeaufschlagung des Schmutzsammelbehälters (24) über die erste Absaugleitung (52) und das erste Filter (56) sowie ein zweites Saugaggregat (50) zur Unterdruckbeaufschlagung des Schmutzsammelbehälters (24) über die zweite Absaugleitung (54) und das zweite Filter (58) aufweist, **dadurch gekennzeichnet, dass** das Sauggerät (10; 100) einen ersten Fremdlufteinlass (62) sowie einen zweiten Fremdlufteinlass (64) aufweist, über den Fremdluft in die erste Absaugleitung (52) bzw. in die zweite Absaugleitung (54) einströmen kann zur reinraumseitigen Beaufschlagung des ersten Filters (56) bzw. des zweiten Filters (58) mit Fremdluft und welcher mittels eines ersten Schließventils (70) bzw. eines zweiten Schließventils (72) verschließbar ist, dass die erste Absaugleitung (52) und die zweite Absaugleitung (54) reinraumseitig zumindest während des Abreinigens des ersten Filters (56) und des zweiten Filters (58) relativ zueinander abgedichtet sind und dass in die erste Absaugleitung (52) zum Abreinigen des ersten Filters (56) einströmende Fremdluft weitgehend mit dem ersten Saugaggregat (46) und in die zweite Absaugleitung (54) zum Abreinigen des zweiten Filters (58) einströmende Fremdluft weitgehend mit dem zweiten Saugaggregat (50) absaugbar ist.

10. Sauggerät nach Anspruch 9, **dadurch gekennzeichnet, dass** die erste Absaugleitung (52) und die zweite Absaugleitung (54) dauerhaft relativ zueinander abgedichtet sind.

11. Sauggerät nach Anspruch 9 oder 10, **dadurch gekennzeichnet, dass** die erste Absaugleitung (52) und die zweite Absaugleitung (54) als räumlich voneinander getrennte Absaugkanäle ausgebildet sind.

12. Sauggerät nach einem der Ansprüche 9 bis 11, **dadurch gekennzeichnet, dass** das Sauggerät (10; 100) ein Gehäuse (12) mit einem ersten Gehäuseteil (14) aufweist, das die erste Absaugleitung (52) und/oder die zweite Absaugleitung (54) zumindest teilweise ausbildet.

13. Sauggerät nach einem der Ansprüche 9 bis 12, **dadurch gekennzeichnet, dass** das Sauggerät (10; 100) ein Gehäuse (12) mit einem zweiten Gehäuseteil (16) aufweist, das zumindest teilweise eine Wandung zumindest eines Fremdluftkanals (66) ausbildet, der über den ersten Fremdlufteinlass (62) in die erste Absaugleitung (52) und/oder über den zweiten Fremdlufteinlass (64) in die zweite Absaugleitung (54) mündet.

14. Sauggerät nach einem der Ansprüche 9 bis 13, **dadurch gekennzeichnet, dass** das erste Schließventil (70) und/oder das zweite Schließventil (72) einen gerätefesten ersten Ventilsitz (62) bzw. zweiten Ventilsitz (64) sowie einen relativ dazu beweglichen ersten Ventilkörper (74) bzw. zweiten Ventilkörper (80) aufweisen, der in einer Schließstellung am ersten Ventilsitz (62) bzw. am zweiten Ventilsitz (64) dichtend anliegt und in einer Öffnungsstellung vom ersten Ventilsitz (62) bzw. vom zweiten Ventilsitz (64) angehoben ist.

15. Sauggerät nach Anspruch 14, **dadurch gekennzeichnet, dass** das erste Schließventil (70) und/oder das zweite Schließventil (72) ein erstes Rückstellglied (106) bzw. ein zweites Rückstellglied (110) umfassen, entgegen dessen Wirkung der erste Ventilkörper (74) bzw. der zweite Ventilkörper (80) von der Schließstellung in die Öffnungsstellung überführbar ist.

16. Sauggerät nach Anspruch 14 oder 15, **dadurch gekennzeichnet, dass** das erste Schließventil (70) und/oder das zweite Schließventil (72) einen ersten Elektromagneten (102) bzw. einen zweiten Elektromagneten (108) umfassen, durch dessen Wirkung der erste Ventilkörper (74) bzw. der zweite Ventilkörper (80) in der Schließstellung gehalten ist.

17. Sauggerät nach einem der Ansprüche 9 bis 16, **dadurch gekennzeichnet, dass** das Sauggerät (10; 100) eine mit dem ersten Schließventil (70) und/oder dem zweiten Schließventil (72) in elektrischer Verbindung stehende Steuerungs- und/oder Regelungseinheit (76) umfasst, mit der das erste Schließventil (70) bzw. das zweite Schließventil (72) ansteuerbar sind.

## Claims

1. Method for cleaning a first filter and a second filter of a suction device for cleaning purposes, which comprises a dirt collection container with a suction inlet, wherein the dirt collection container is subjected to negative pressure via the first filter and the second filter and a first suction line and a second suction line, respectively, following the first filter and the second filter, wherein the dirt collection container is subjected to negative pressure via the first suction line and the first filter by a first suction unit of the suction device and via the second suction line and the second filter by a second suction unit of the suction device, **characterized in that** a first closing valve and a second closing valve close a first external air inlet and a second external air inlet, respectively, into the first suction line and the second suction line, respectively, and to clean the first filter and the second filter, the first closing valve and the second closing valve, respectively, are opened, in order to subject the first filter and the second filter, respectively, to external air on the clean space side, **in that** the first suction line and the second suction line are sealed off relative to each other on the clean space side at least during the cleaning of the first filter and the second filter, and **in that** external air flowing into the first suction line to clean the first filter is sucked off to a large extent by the first suction unit, and external air flowing into the second suction line to clean the second filter is sucked off to a large extent by the second suction unit.

2. Method in accordance with claim 1, **characterized in that** the first suction line and the second suction line are permanently sealed off relative to each other on the clean space side.

3. Method in accordance with claim 1 or 2, **characterized in that** the first closing valve and the second closing valve are actuated at different points in time.

4. Method in accordance with any one of the preceding claims, **characterized in that** the first closing valve and the second closing valve are not open at the same point in time.

5. Method in accordance with any one of the preceding claims, **characterized in that** the first closing valve and/or the second closing valve are actuated at prescribable intervals.

6. Method in accordance with any one of the preceding claims, **characterized in that** the first closing valve and/or the second closing valve are opened for prescribable periods of time.

7. Method in accordance with any one of the preceding claims, **characterized in that** the first closing valve and/or the second closing valve are electronically actuated.

8. Method in accordance with any one of the preceding claims, **characterized in that** the first closing valve and/or the second closing valve are actuated in dependence upon a pressure difference forming between the first suction line and the dirt collection container and between the second suction line and the dirt collection container, respectively, while the first closing valve and the second closing valve, respectively, are closed.

9. Suction device for cleaning purposes, for performing the method in accordance with any one of the preceding claims, with a dirt collection container (24), which comprises a suction inlet (26), the suction device (10; 100) comprising at a first suction outlet (28) a first filter (56) and at a second suction outlet (30) a second filter (58), which are followed by a first suction line (52) and a second suction line (54), respectively, via which the dirt collection container (24) can be subjected to negative pressure, and the suction device (10; 100) comprising a first suction unit (46) for subjecting the dirt collection container (24) to negative pressure via the first suction line (52) and the first filter (56) and comprising a second suction unit (50) for subjecting the dirt collection container (24) to negative pressure via the second suction line (54) and the second filter (58), **characterized in that** the suction device (10; 100) comprises a first external air inlet (62) and a second external air inlet (64), via which external air can flow into the first suction line (52) and into the second suction line (54), respectively, in order to subject the first filter (56) and the second filter (58), respectively, to external air on the clean space side, and which are closable by a first closing valve (70) and a second closing valve (72), respectively, **in that** the first suction line (52) and the second suction line (54) are sealed off relative to each other on the clean space side at least during the cleaning of the first filter (56) and the second filter (58), and **in that** external air flowing into the first suction line (52) to clean the first filter (56) can be sucked off to a large extent by the first suction unit (46), and external air flowing into the second suction line (54) to clean the second filter (58) can be sucked off to a large extent by the second suction unit (50).

10. Suction device in accordance with claim 9, **characterized in that** the first suction line (52) and the second suction line (54) are permanently sealed off relative to each other.

11. Suction device in accordance with claim 9 or 10, **characterized in that** the first suction line (52) and the second suction line (54) are configured as suction channels that are spatially separated from each other.

12. Suction device in accordance with any one of claims 9 to 11, **characterized in that** the suction device (10; 100) comprises a housing (12) with a first housing part (14), which at least partially forms the first suction line (52) and/or the second suction line (54).

13. Suction device in accordance with any one of claims 9 to 12, **characterized in that** the suction device (10; 100) comprises a housing (12) with a second housing part (16), which at least partially forms a wall of at least one external air channel (66), which opens via the first external air inlet (62) into the first suction line (52) and/or via the second external air inlet (64) into the second suction line (54).

14. Suction device in accordance with any one of claims 9 to 13, **characterized in that** the first closing valve (70) and/or the second closing valve (72) have a first valve seat (62) and a second valve seat (64), respectively, fixed to the device, and a first valve body (74) and a second valve body (80), respectively, which are movable relative to the first valve seat (62) and the second valve seat (64), respectively, and which, in a closed position, sealingly engage the first valve seat (62) and the second valve seat (64), respectively, and, in an open position, are lifted off from the first valve seat (62) and from the second valve seat (64), respectively.

15. Suction device in accordance with claim 14, **characterized in that** the first closing valve (70) and/or the second closing valve (72) comprise a first restoring member (106) and a second restoring member (110), respectively, counter to the action of which the first valve body (74) and the second valve body (80), respectively, are transferable from the closed position to the open position.

16. Suction device in accordance with claim 14 or 15, **characterized in that** the first closing valve (70) and/or the second closing valve (72) comprise a first electromagnet (102) and a second electromagnet (108), respectively, by the action of which the first valve body (74) and the second valve body (80), respectively, are held in the closed position.

17. Suction device in accordance with any one of claims 9 to 16, **characterized in that** the suction device (10; 100) comprises a control unit (76) in electrical connection with the first closing valve (70) and/or the second closing valve (72), with which control unit (76) the first closing valve (70) and the second closing valve (72), respectively, are controllable.

## Revendications

1. Procédé destiné à décrasser un premier filtre et un second filtre d'un aspirateur à des fins de nettoyage, comprenant un récipient collecteur de poussières doté d'une entrée d'aspiration, le récipient collecteur de poussière étant soumis à une dépression par l'intermédiaire du premier filtre et du second filtre ainsi que d'un premier conduit d'aspiration respectivement d'un second conduit d'aspiration s'y raccordant, le récipient collecteur d'aspiration étant soumis à une dépression par l'intermédiaire du premier conduit d'aspiration et du premier filtre à l'aide d'un premier ensemble d'aspiration de l'aspirateur et par l'intermédiaire du second conduit d'aspiration et du second filtre à l'aide d'un second ensemble d'aspiration de l'aspirateur, **caractérisé en ce qu'**une première soupape de fermeture et une seconde soupape de fermeture ferment un premier orifice d'entrée d'air extérieur et un second orifice d'entrée d'air extérieur respectivement dans le premier conduit d'aspiration et le second conduit d'aspiration, la première soupape de fermeture respectivement la seconde soupape de fermeture, pour décrasser le premier filtre et le second filtre, étant ouverte afin d'exposer le premier filtre respectivement le second filtre à de l'air extérieur, du côté de l'espace nettoyé, **en ce que** le premier conduit d'aspiration et le second conduit d'aspiration sont rendus étanches l'un par rapport à l'autre, du côté de l'espace nettoyé, au moins pendant le décrassage du premier filtre et du second filtre et **en ce que** l'air extérieur affluant dans le premier conduit d'aspiration pour décrasser le premier filtre est aspiré en grande partie au moyen du premier ensemble d'aspiration et l'air extérieur affluant dans le second conduit d'aspiration pour décrasser le second filtre est aspiré en grande partie au moyen du second ensemble d'aspiration.

2. Procédé selon la revendication 1, **caractérisé en ce que** le premier conduit d'aspiration et le second conduit d'aspiration sont rendus durablement étanches l'un par rapport à l'autre du côté de l'espace nettoyé.

3. Procédé selon la revendication 1 ou 2, **caractérisé en ce que** la première soupape de fermeture et la seconde soupape de fermeture sont actionnées à différents moments.

4. Procédé selon l'une quelconque des revendications précédentes, **caractérisé en ce que** la première soupape de fermeture et la seconde soupape de fermeture ne sont pas ouvertes au même moment.

5. Procédé selon l'une quelconque des revendications précédentes, **caractérisé en ce que** la première soupape de fermeture et/ou la seconde soupape de fermeture sont actionnées par intervalles pouvant être prédéfinis.

6. Procédé selon l'une quelconque des revendications précédentes, **caractérisé en ce que** la première soupape de fermeture et/ou la seconde soupape de fermeture sont ouvertes pour des durées pouvant être prédéfinies.

7. Procédé selon l'une quelconque des revendications précédentes, **caractérisé en ce que** la première soupape de fermeture et/ou la seconde soupape de fermeture sont actionnées électroniquement.

8. Procédé selon l'une quelconque des revendications précédentes, **caractérisé en ce que** la première soupape de fermeture et/ou la seconde soupape de fermeture sont actionnées en fonction d'une différence de pression se formant entre le premier conduit d'aspiration et le récipient collecteur de poussières respectivement entre le second conduit d'aspiration et le récipient collecteur de poussières lorsque la première soupape de fermeture est fermée respectivement lorsque la seconde soupape de fermeture est fermée.

9. Aspirateur à des fins de nettoyage destiné à mettre en oeuvre le procédé selon l'une quelconque des revendications précédentes, doté d'un récipient collecteur de poussières (24) comprenant une entrée d'aspiration (26), l'aspirateur (10 ; 100) comprenant un premier filtre (56) à une première sortie d'aspiration (28) et un second filtre (58) à une seconde sortie d'aspiration (30), auxquelles se raccordent un premier conduit d'aspiration (52) respectivement un second conduit d'aspiration (54), par l'intermédiaire desquels le récipient collecteur de poussières (24) est soumis à une dépression, et l'aspirateur (10 ; 100) comprenant un premier ensemble d'aspiration (46) destiné à soumettre le récipient collecteur de poussières (24) à une dépression par l'intermédiaire du premier conduit d'aspiration (52) et du premier filtre (56) ainsi qu'un deuxième ensemble d'aspiration (50) destiné à soumettre le récipient collecteur de poussières (24) à une dépression par l'intermédiaire du second conduit d'aspiration (54) et du second filtre (58), caractérisé en ce l'aspirateur (10 ; 100) comprend un premier orifice d'entrée d'air extérieur (62) et un second orifice d'entrée d'air extérieur (64) par l'intermédiaire desquels l'air extérieur peut affluer dans le premier conduit d'aspiration (52) respectivement dans le second conduit d'aspiration (54) pour exposer le premier filtre (56) respectivement le second filtre (58) à un air extérieur, du côté de l'espace nettoyé, et pouvant être fermé au moyen d'une première soupape de fermeture (70) respectivement d'une seconde soupape de fermeture (72), en ce que le premier conduit d'aspiration (52) et le second conduit d'aspiration (54) sont rendus étanches l'un par rapport à l'autre, du côté de l'espace nettoyé, au moins pendant le décrassage du premier filtre (56) et du second filtre (58) et en ce que l'air extérieur affluant dans le premier conduit d'aspiration (52) pour décrasser le premier filtre (56) est aspiré en grande partie au moyen du premier ensemble d'aspiration (46) et en ce que l'air extérieur affluant dans le second conduit d'aspiration (54) pour décrasser le second filtre (58) est aspiré en grande partie au moyen du second ensemble d'aspiration (50).

10. Aspirateur selon la revendication 9, **caractérisé en ce que** le premier conduit d'aspiration (52) et le second conduit d'aspiration (54) sont rendus durablement étanches l'un par rapport à l'autre.

11. Aspirateur selon la revendication 9 ou 10, **caractérisé en ce que** le premier conduit d'aspiration (52) et le second conduit d'aspiration (54) sont réalisés comme des canaux d'aspiration séparés l'un de l'autre dans l'espace.

12. Aspirateur selon l'une quelconque des revendications 9 à 11, **caractérisé en ce que** l'aspirateur (10 ; 100) comprend un boîtier (12) doté d'une première partie (14) formant au moins en partie le premier conduit d'aspiration (52) et/ou le second conduit d'aspiration (54).

13. Aspirateur selon l'une quelconque des revendications 9 à 12, **caractérisé en ce que** l'aspirateur (10 ; 100) comprend un boîtier (12) doté d'une seconde partie (16) et formant au moins en partie une paroi d'au moins un canal d'air extérieur (66) débouchant par le premier orifice d'entrée d'air extérieur (62) dans le premier conduit d'aspiration (52) et/ou par le second orifice d'entrée d'air extérieur (64) dans le second conduit d'aspiration (54).

14. Aspirateur selon l'une quelconque des revendications 9 à 13, **caractérisé en ce que** la première soupape de fermeture (70) et/ou la seconde soupape de fermeture (72) comprennent un premier siège de soupape (62) respectivement un second siège de soupape (64) fixés à l'appareil et un premier corps de soupape (74) respectivement un second corps de soupape (80) mobiles par rapport auxdits sièges, reposant de manière étanche dans une position fermée contre le premier siège de soupape (62) respectivement contre le second siège de soupape (64) et soulevés dans une position ouverte du premier siège de soupape (62) respectivement du second siège de soupape (64).

15. Aspirateur selon la revendication 14, **caractérisé en ce que** la première soupape de fermeture (70) et/ou la seconde soupape de fermeture (72) comprennent un premier élément de rappel (106) respectivement un second élément de rappel (110), à l'encontre de l'action duquel le premier corps de soupape (74) respectivement le second corps de soupape (80) peut être transféré de la position fermée à la position ouverte.

16. Aspirateur selon la revendication 14 ou 15, **caractérisé en ce que** la première soupape de fermeture (70) et/ou la seconde soupape de fermeture (72) comprennent un premier électroaimant (102) respectivement un second électroaimant (108) par l'action duquel le premier corps de soupape (74) respectivement le second corps de soupape (80) est retenu dans la position fermée.

17. Aspirateur selon l'une quelconque des revendications 9 à 16, **caractérisé en ce que** l'aspirateur (10 ; 100) comprend une unité de commande et/ou de régulation (76) en connexion électrique avec la première soupape de fermeture (70) et/ou avec la seconde soupape de fermeture (72) et permettant de commander la première soupape de fermeture (70) ou la seconde soupape de fermeture (72).
